# EUROPÄISCHE PATENTANMELDUNG

(11) **EP 2 164 000 A1**
(43) Veröffentlichungstag der Anmeldung: **17.03.2010**
(21) Anmeldenummer: 08016197.9
(22) Anmeldetag: 15.09.2008
(51) Int. Cl.: G06F 17/21, G06F 17/24

(54) **Verfahren zur Konvertierung von Textinformationen in ein Dokument im pdf-Format**

(71) Anmelder: Deutsche Post AG, 53113 Bonn (DE)
(72) Erfinder: Karakus, Sakine, 51469 Bergisch Gladbach (DE)
(74) Vertreter: Jostarndt, Hans-Dieter

(57) **Zusammenfassung**

Die Erfindung betrifft ein Verfahren zur Konvertierung von Textinformationen innerhalb eines Texteditorfeldes (50) mit einem definierten Bezugspunkt T, die in wenigstens einer Textzeile (51) in dem Texteditorfeld (50) erfasst werden, wobei die Textinformationen durch ein Konvertierungsmodul (24) in ein Dokument (40) im pdf-Format konvertiert werden. Das Dokument (40) beinhaltet im pdf-Format wenigstens eine Druckfläche (70), die dem Texteditorfeld (50) entspricht, und bei der Konvertierung der Textinformationen durch das Konvertierungsmodul (24) werden wenigstens die Schriftgröße und die Schriftart der Textzelle (51) als Metadaten verwendet. Das Verfahren zeichnet sich dadurch aus, dass um jede Textzeile (51) im Texteditorfald (50) ein fiktiver rechteckiger Umriss (52) erstellt wird, dessen Lage und Größe in Bezug zum Bezugspunkt T im Texteditorfeld (50) bestimmt wird. Bei der Konvertierung wird in der Druckfläche (70) des zu erstellenden pdf-Dokuments (40) an der gleichen Stelle ein entsprechender Umriss (52') mit der gleichen Größe erstellt und die Textinformationen der betreffenden Textzeile genau in den Umriss (52') eingefügt.

## Beschreibung

Die Erfindung betrifft ein Verfahren zur Konvertierung von Textinformationen innerhalb eines Texteditorfeldes in ein Dokument im pdf-Format durch ein Konvertierungsmodul, wobei die Textinformationen in wenigstens einer Textzeile in dem Texteditorfeld erfasst werden und das Dokument im pdf-Format wenigstens eine Druckfläche beinhaltet, die dem Texteditorfeld entspricht. Bei der Konvertierung der Textinformationen durch das Konvertierungsmodul werden wenigstens die Schriftgröße und die Schriftart der Textzeile als Metadaten verwendet.

Zunehmend besteht der Bedarf nach Online-Anwendungen, über die vorzugsweise mehrere Nutzer angebotene Funktionen nutzen können, um beispielsweise Texte, Tabellen und/oder Bilder zu erstellen und fortlaufend zu bearbeiten. Für den Zugriff auf eine solche web-basierte Applikation benötigt ein Nutzer lediglich einen Internetanschluss und einen Web-Browser auf seinem lokalen Computer. Die Funktionen der Applikation werden dem Nutzer über seinen Web-Browser zur Verfügung gestellt. In besonders vorteilhaften Ausgestaltungen ist es dabei möglich, dass mehrere Personen eine Datei gemeinsam in Echtzeit erstellen und bearbeiten können. Dazu muss ein Moderator üblicherweise lediglich die E-Mail-Adressen der Personen eingeben, mit denen er an einem bestimmten Dokument zusammenarbeiten möchte, wodurch diese Personen eingeladen werden. Jede der eingeladenen Personen kann sich daraufhin anmelden und das freigegebene Dokument lesen und/oder bearbeiten. Dabei geben Dokumentversionen genau an, was, wann und von wem geändert wurde. Die erstellten und bearbeiteten Dateien werden üblicherweise zentral auf einem Server gehalten, sie können jedoch bei Bedarf auch von den beteiligten Personen auf einen lokalen Computer herunter geladen werden.

Über eine solche Online-Anwendung können einer Vielzahl von Nutzern verschiedene Office-Suites verfügbar gemacht werden, wobei es sich bei einer Office-Suite um eine Sammlung von typischen Büroapplikationen handeln kann, die aufeinander abgestimmt sind. Beispielsweise können eine Textverarbeitung, eine Tabellenkalkulation, ein Präsentationsprogramm und/oder ein Datenbankprogramm angeboten werden.

Ein Beispiel für eine solche Online Office Suite ist derzeit die Applikation *Google Text & Tabellen,* die von dem Unternehmen Google Inc. mit Sitz in Mountain View, Kalifornien, USA, als Beta-Version angeboten wird. Ferner ermöglicht es die Beta-Version des Produkts *Adobe*® *Buzzword*® des Unternehmens Adobe Systems, Inc. mit Sitz in San Jose, Kalifornien, USA, ebenfalls mehreren Nutzern ein angebotenes Textverarbeitungsprogramm online zu nutzen

Derartige Online-Anwendungen haben den Vorteil, dass ein Nutzer nicht für jede Funktion, die er nutzen möchte, ein entsprechendes Programm auf seinem lokalen Computer installieren muss, da es sich um eine web-basierte Applikation handelt, auf die über jeden Web-Browser zugegriffen werden kann. Auch die erstellten und von mehreren Personen bearbeitbaren Dateien müssen nicht lokal bei jedem Nutzer gespeichert werden, sondern werden zentral verwaltet. Ein Nutzer ist somit unabhängig von einem bestimmten Computer, auf dem eine Anwendung installiert und Daten gespeichert sind, sondern kann an jedem Ort, der über einen Internetanschluss und einen Web-Browser verfügt, Dateien erstellen und bearbeiten.

Dieser Vorteil web-basierter Applikationen ist beispielsweise für die Erstellung von Print-Erzeugnissen wie Hochzeitszeitungen einsetzbar, da hierbei die Wort- und Bildbeiträge mehrerer Personen gesammelt und zu einer Hochzeitszeitung zusammengefügt werden müssen. Dabei ist es oftmals nicht jeder Person zuzumuten, hierfür ein Programm auf ihrem Computer zu installieren. Beispielsweise offenbart die englische Zusammenfassung der koreanischen Patentanmeldung mit der Veröffentlichungsnummer KR 10 2005 000 5943 A, dass die Erstellung einer personalisierten Hochzeitszeitung über eine kostenpflichtige Website angeboten werden kann. Der Nutzer kann für die Erstellung der Zeitung ein Template auswählen und damit über die Website die gewünschte Zeitung erstellen.

Neben der typischen Anwendung für Hochzeitszeitungen ist es jedoch auch möglich, web-basierte Applikationen für die gemeinsame Erstellung jeglicher Print-Erzeugnisse wie beispielsweise Vereinszeitungen, Geburtstagsanzeigen, Werbebroschüren, etc. einzusetzen. Bei der Erstellung eines solchen Print-Erzeugnisses werden üblicherweise von einer oder mehreren Personen Textinformationen im Texteditorfeld eines Texteditors erfasst und den betreffenden Personen auf einer Anzeige wie einem Bildschirm angezeigt. Der Erstellungsprozess kann dabei nicht nur die Erstellung der Textinhalte, sondern auch eine gewünschte Formatierung umfassen, wobei beispielsweise Schriftgröße, Schriftart und Positionierung eines Textfeldes innerhalb einer Druckseite festgelegt werden. Um nach Abschluss dieses Erstellungsprozesses einen hochwertigen Ausdruck der Texte zu erhalten, werden die erstellten Texte typischerweise als Datei einem Druckdienstleister übermittelt, der die Datei beispielsweise auf einem Digitaldrucker ausdruckt. Als Dateiformat für eine solche Datei wird oftmals das pdf-Format (Portable Document Format) verwendet, da es sich um ein plattformübergreifendes Dokumentenformat handelt, das besonders gut für einen solchen Datentransfer geeignet ist, bei dem Inhalte nach der Erstellung in keiner Weise verändert werden sollen.

Bei Verwendung der beispielhaft genannten Online-Applikationen zur Erzeugung eines Print-Erzeugnisses, in denen Textinformationen von mehreren Personen über einen web-basierten Texteditor erstellt und wiederholt verändert werden, verfügen die beteiligten Nutzer jedoch über keine bearbeitbare Textdatei, die von ihnen selbst in ein Dokument im pdf-Format konvertiert werden kann. Vielmehr erfolgt die gesamte Datenhaltung vorzugsweise vollständig auf dem Applikationsserver und den Nutzern wird in ihren Web Browsern lediglich eine Vorschau des von ihnen erstellten Print-Erzeugnisses angezeigt. Aus dieser Vorgehensweise ergibt sich, dass ein Konvertierungsmodul in Verbindung mit dem Applikationsserver die Konvertierung in ein pdf-Dokument vornimmt. Hierbei muss jedoch sichergestellt werden, dass die den Nutzern zuvor zur Vorschau angezeigten Textinformationen und ihre Formatierungen auch originalgetreu in der dann auszudruckenden Datei im pdf-Format erscheinen. Dies konnte bisher mit herkömmlichen Verfahren nicht vollständig sichergestellt werden, da insbesondere Zeilenumbrüche oftmals nicht originalgetreu konvertiert werden. Bekannte Verfahren zur Konvertierung von Textinformationen eignen sich somit nicht für eine web-basierte Applikation, über die von mehreren Nutzern online ein hochwertiges Print-Erzeugnis erstellt wird.

Aufgabe der Erfindung ist es daher, ein Verfahren bereitzustellen, mit dem Textinformationen, die von wenigstens einem Nutzer in ein Texteditorfeld eingegeben wurden, originalgetreu in ein Dokument im pdf-Format konvertiert werden. Das Verfahren soll sich insbesondere für Texteditoren in web-basierten Online-Anwendungen eignen.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-6.

Das erfindungsgemäße Verfahren gemäß dem Oberbegriff des Anspruchs 1 zeichnet sich durch folgende Verfahrensschritte aus
a) Erstellen eines fiktiven rechteckigen Umrisses um die Textzeile im Texteditorfeld, wobei dieser rechteckige Umriss zwei diagonal gegenüber liegende Eckpunkte U1 und U2 aufweist;
b) Ermitteln des Abstands zwischen dem Bezugspunkt T des Texteditorfeldes und dem Eckpunkt U1 des Umrisses; und Ermitteln des Abstands zwischen dem Bezugspunkt T des Texteditorfeldes und dem Eckpunkt U2 des Umrisses;
c) Verknüpfung der beiden ermittelten Abstände wenigstens mit der Schriftgröße und der Schriftart der Textinformationen der Textzeile zu Metadaten und Speichern der Textinformationen und der zugehörigen Metadaten in einem Speicher;
d) Konvertieren der Textinformationen der Textzeile in ein Dokument im pdf-Format, wobei die zugehörigen Metadaten aus dem Speicher verwendet werden, indem
e) das Konvertierungsmodul die Abmessungen der Druckfläche des zu erstellenden Dokuments im pdf-Format mit den Abmessungen des Texteditorfeldes gleichsetzt und in der Druckfläche des Dokuments einen Bezugspunkt D definiert, dessen Position dem Bezugspunkt T im Texteditorfeld entspricht; und
f) das Konvertierungsmodul in der Druckfläche einen fiktiven rechteckigen Umriss mit diagonal gegenüberüegenden Eckpunkten U1' und U2' erstellt, deren Position der Position der Eckpunkte U1 und U2 des Umrisses im Texteditorfeld entspricht, wobei der jeweilige Abstand zwischen den Eckpunkten U1' und U2' und dem definierten Bezugspunkt D der Druckfläche dem jeweiligen Abstand zwischen den Eckpunkten U1 und U2 und dem definierten Bezugspunkt T des Texteditorfeldes entspricht; und
g) das Konvertierungsmodul die Textinformationen der Textzeile in der vorgegebenen Schriftart und Schriftgröße in den fiktiven Umriss einfügt und in der Druckfläche eine Textzeile erzeugt; und
h) das Konvertierungsmodul wenigstens die Druckfläche in ein Dokument im pdf-Format konvertiert.

In einem Ausführungsbeispiel der Erfindung berührt der fiktive rechteckige Umriss im Texteditorfeld die Textinformationen der Textzeile an allen vier Seiten, während der fiktive rechteckige Umriss in der Druckfläche die eingefügten Textinformationen der Textzeile ebenfalls an allen vier Seiten berührt.

Im Texteditorfeld können mehrere Textzeilen mit Textinformationen erfasst werden und für die Konvertierung mehrerer Textzeilen die Verfahrensschritte a) bis g) in der Druckfläche des zu erstellenden Dokuments im pdf-Format für jede der Textzeilen durchgeführt werden, wobei für jede Textzeile ein fiktiver rechteckiger Umriss im Texteditorfeld und in der Druckfläche erzeugt wird. Neben mehreren Textzeilen kann wenigstens ein Bildmotiv in das Dokument im pdf-Format aufgenommen werden.

In einem bevorzugten Ausführungsbeispiel der Erfindung wird das Texteditorfeld in einem Web Browser über einen Texteditor erzeugt, der von einer web-basierten Anwendung auf einem Applikationsserver bereitgestellt wird, und die Textinformationen wenigstens einer Textzeile werden zusammen mit den dazu erstellten Metadaten in einem Speicher des Applikationsservers hinterlegt, bevor sie an das Konvertierungsmodul übermittelt werden, das in Verbindung mit dem Applikationsserver steht.

Die Metadaten zu Textinformationen einer Textzeile können entweder fortlaufend im Speicher verändert werden, sobald Änderungen der betreffenden Textzeile im Texteditorfeld vorgenommen wurden, oder die Metadaten zu Textinformationen einer Textzeile werden erst erstellt und im Speicher hinterlegt, wenn ein Speichersignal in dem Texteditor aktiviert wurde.

Die Erfindung ermöglicht die Konvertierung von Textinformationen, die von einem oder mehreren Nutzern in einem web-basierten Texteditor erstellt wurden, in ein pdf-Dokument, ohne dass sich das optische Erscheinungsbild der einzelnen Textzeilen wesentlich verändert. Insbesondere entsprechen die Zeilenumbrüche in der Druckdatei den Zeilenumbrüchen im Online-Texteditor. Eine Druckseite des aus der pdf-Datei zu erzeugenden Druck-Erzeugnisses entspricht somit der Vorschau der betreffenden Druckseite im Web Browser eines Nutzers. Nur wenn diese Voraussetzung erfüllt ist, kann die Erstellung von Druck-Erzeugnissen erfolgreich über eine Online-Applikation mit web-basiertem Texteditor angeboten werden, da ein Ausdruck, der von einer zuvor durch die Nutzer zum Druck beauftragten Vorschau abweicht, nicht akzeptabel wäre.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel einer Anordnung von Komponenten zur Durchführung des erfindungsgemäßen Verfahrens;
- Fig. 2: Verfahrensschritte bei einem Ausführungsbeispiel des erfindungsgemäßen Verfahrens; und
- Fig. 3: eine schematische Darstellung der Übertragung von Textzeilen von einem Texteditorfeld in die Druckfläche eines pdf-Dokuments.

Das erfindungsgemäße Verfahren eignet sich insbesondere zur Konvertierung von Textinformationen in ein pdf-Dokument, wobei die Textinformationen in einem Texteditorfeld eines Texteditors erzeugt wurden, der mehreren Nutzern web-basiert über einen Applikationsserver bereitgestellt wird. Daher wird die Erfindung im Folgenden beispielhaft anhand eines solchen Online-Texteditors beschrieben. Die Beschreibung ist jedoch nicht einschränkend zu verstehen, sondern das Verfahren könnte auch für andere Arten von Texteditoren eingesetzt werden, die nicht web-basiert sind. Ferner eignet sich das erfindungsgemäße Verfahren insbesondere für den Einsatz in Online-Applikationen, mit denen mehrere Personen gemeinsam ein Druckerzeugnis wie eine Hochzeitszeitung oder eine Vereinszeitung erstellen. Andere Anwendungsgebiete sind jedoch ebenfalls denkbar.

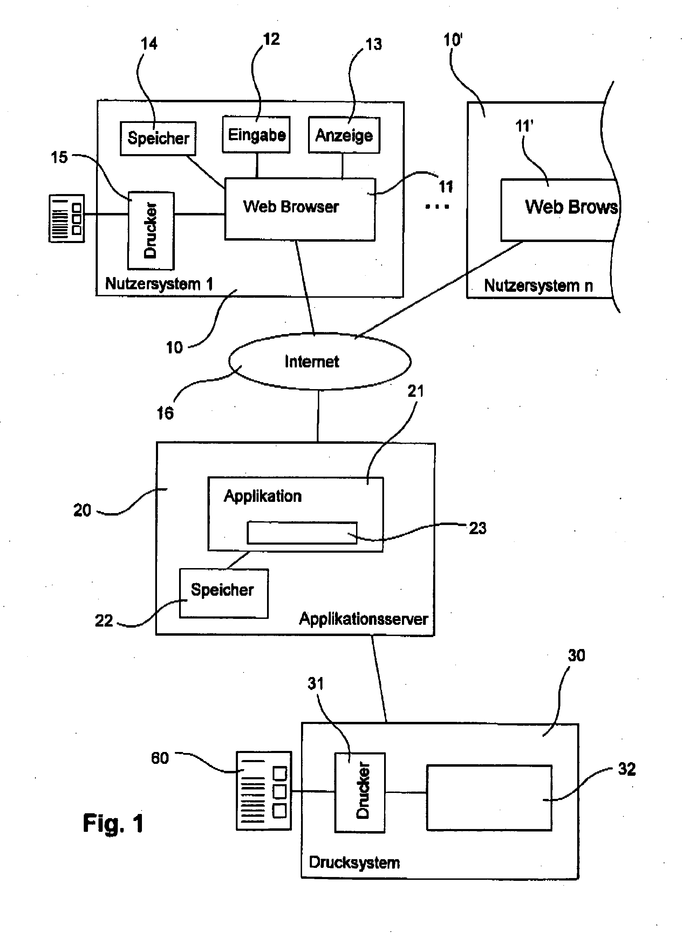

Das erfindungsgemäße Verfahren kann durch eine Anordnung von Komponenten durchgeführt werden, wie sie beispielhaft in Fig. 1 dargestellt ist. Hierbei ist wenigstens ein erstes Computersystem 10 vorgesehen, dass sich im Bereich eines ersten Nutzers befindet. Bei dem Computersystem 10 kann es sich um einen lokalen Computer/PC oder beispielsweise auch um ein tragbares Gerät wie ein Laptop oder ein Mobiltelefon mit Internetfunktion handeln. Dieses erste Computersystem 10 im Bereich eines Nutzers wird im Folgenden auch als Nutzersystem bezeichnet.

Das Nutzersystem 10 weist einen Web Browser 11 oder eine ähnliche Anwendung auf, welche die Verbindung des Nutzersystems über eine Internetverbindung 16 zu einem zweiten Computersystem 20 ermöglicht, das einen Applikationsserver umfasst, auf dem vom Nutzer gewünschte Funktionen online angeboten werden. Bei den angebotenen Funktionen handelt es sich wenigstens um Textverarbeitungsfunktionen. Vorzugsweise können mehrere Nutzersysteme bis zu einer beliebigen Anzahl n über das Internet Zugriff auf die Funktionen des Applikationsservers 20 nehmen, wobei jedes weitere Nutzersystem 10' ebenfalls über einen Web Browser 11' verfügt.

Die Konfiguration der Nutzersysteme kann variieren. Zweckmäßigerweise umfassen sie jedoch wenigstens einen Speicher 14, eine Eingabeeinrichtung 12 und eine Anzeige 13. Bei der Anzeige 13 handelt es sich beispielsweise um einen separaten Monitor, der an einen Computer angeschlossen ist oder um ein integriertes Display, wie es beispielsweise bei Laptops der Fall ist. Bei der Eingabeeinrichtung 12 kann es sich um eine Tastatur in Verbindung mit einem Zeigegerät wie einer EDV-Maus handeln, über welche Bewegungen des Mauszeigers durch einen Nutzer auf die Anzeige 13 und das Betriebssystem des Computersystems 10 übertragen werden können. Anzeige 13 und Eingabeeinrichtung 12 können auch durch einen Touch-Screen miteinander kombiniert werden. Sowohl die Anschläge einer Tastatur, Bewegungsinformationen eines Mauszeigers oder Berührungsinformationen eines Touchscreens können über den Web Browser 10 an den Applikationsserver 20 übermittelt werden, welcher die mit den Informationen verbundenen Befehle ausführt. Ein Nutzersystem 10 kann ferner an einen Drucker 15 angeschlossen sein.

Das Frontend beim Nutzer kann beispielsweise über eine bei web-basierten Anwendungen übliche Flash-Technologie realisiert werden. Durch die Kombination von Animation und Programmierung ist Flash besonders geeignet, um komplexe Websites und browser-basierte Anwendungen zu programmieren. Das Frontend kann beispielsweise in ActionScript 3 realisiert werden, wobei auf dem Computersystem des Nutzers ein entsprechender Flash-Plugin installiert sein muss.

Auf dem Applikationsserver des zweiten Computersystems 20 wird eine Anwendung 21 betrieben, welche verschiedene Funktionen bereitstellt. Für dieses Backend-Framework kann beispielsweise PRADO (PHP Rapid Application Development Object-oriented) eingesetzt werden. PRADO ist ein komponenten- und ereignisbasiertes Framework für die Entwicklung von Web-Applikationen. Im Mittelpunkt steht dabei die ereignis-orientierte Programmierung, welche die Benutzerinteraktion in den Vordergrund stellt. Für die Frontendentwicklung stellt PRADO eine Vielzahl von Komponenten zur Verfügung, so dass sich Benutzeroberflächen bausteinartig zusammenstellen lassen. Die Kommunikation zwischen Frontend und Backend kann mittels Flash-Remoting durchgeführt werden.

Als Web-Server kann Apache2 zum Einsatz kommen. Jede Kommunikation mit den Webservern wird mittels NTTPS verschlüsselt.

Insbesondere umfasst die Anwendung 21 auf dem Server 20 eine Softwarekomponente, die als Texteditorkomponente 23 zu bezeichnen ist. Diese Texteditorkomponente 23 stellt dem Nutzer übliche Funktionen für die Erstellung und Bearbeitung von Textinformationen bereit, die typischerweise über eine Toolbox in Verbindung mit einem Texteditorfeld angeboten werden. Dabei kann der Nutzer vorzugsweise wenigstens die Anordnung eines Textes innerhalb des Editorfeldes, die Schriftgröße und die Schriftart eines Textes wählen.

Es ist vorzugsweise vorgesehen, dass bei Nutzung der Funktionen der Texteditorkomponente 23 die jeweiligen Ergebnisse direkt in dem zugewiesenen Textfeld als Vorschau abgebildet werden. Eine finale Anwendung der ausgewählten Funktionen kann gegebenenfalls erst dann durchgeführt werden, wenn ein Nutzer aktiv die Bearbeitung z.B. mittels Aktivierung eines entsprechenden Interaktionselements bestätigt.

Die Texteditorkomponente 23 steht auf dem Applikationsserver 20 in Verbindung mit einem Speichermedium 22, in welchem die erstellten und bearbeiteten Textinformationen hinterlegt sind. Da die Texte vorzugsweise von mehreren Nutzern bearbeitbar sein sollen, werden sie somit zentral auf dem Applikationsserver 20 hinterlegt und mehreren Nutzern über ihre Web Browser zur Verfügung gestellt.

In einem Ausführungsbeispiel der Erfindung steht der Applikationsserver 20 in Verbindung mit der Druck-Applikation 32 eines Drucksystems 30, das wenigstens einen Drucker 31 zur Erzeugung von Druck-Erzeugnissen 60 umfasst. Bei dem Drucker 31 handelt es sich vorzugsweise um einen Digitaldrucker. Das Drucksystem 31 kann sich entfernt von dem Applikationsserver 20 befinden und beispielsweise ebenfalls über eine Internetverbindung mit dem Applikationsserver 20 verbunden sein. Das Drucksystem 30 kann jedoch auch auf dem Applikationsserver 20 realisiert werden, so dass ein oder mehrere Drucker direkt an den Applikationsserver 20 angeschlossen sind. Die Darstellung der Fig. 1 ist somit nicht einschränkend zu verstehen, sondern stellt lediglich schematisch ein mögliches Ausführungsbeispiel der Erfindung dar.

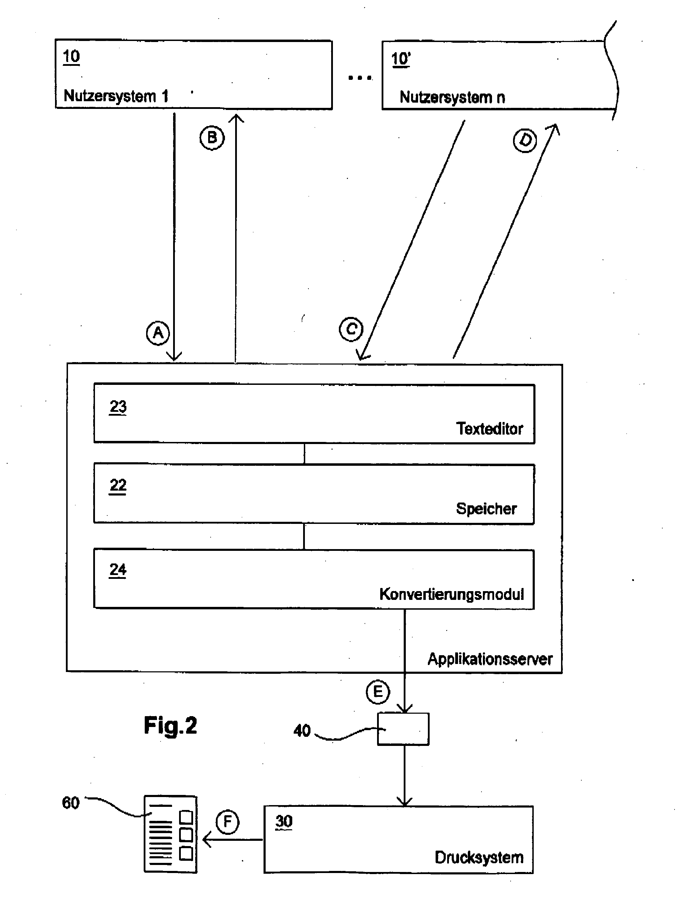

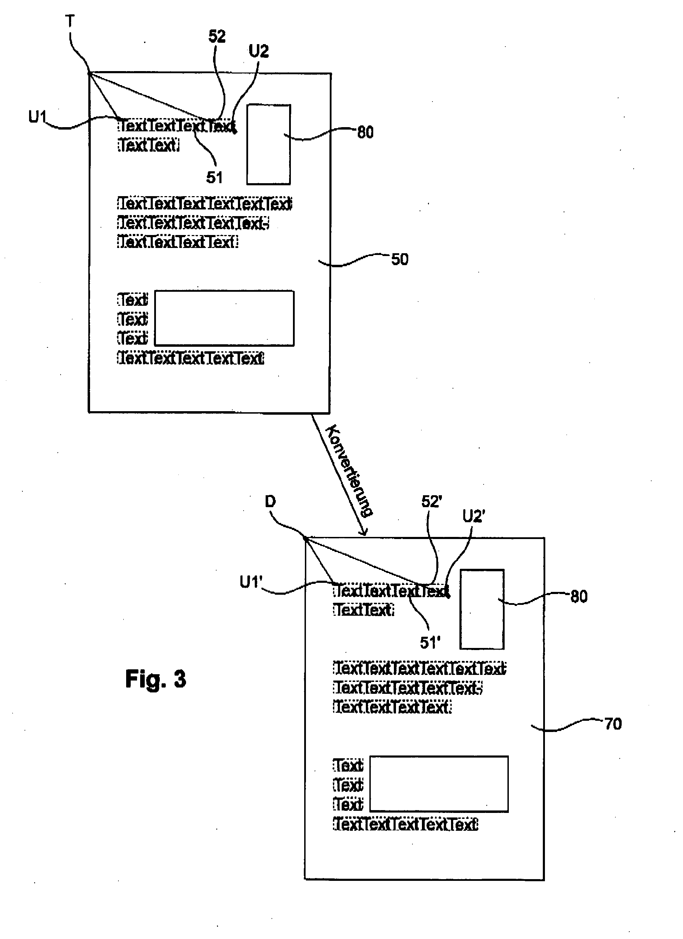

Die einzelnen Schritte des erfindungsgemäßen Verfahrens und die Abläufe in und zwischen den einzelnen Komponenten gemäß Fig. 1 werden im Folgenden beispielhaft anhand der schematischen Darstellung in Fig. 2 erläutert. Fig. 2 zeigt erneut mehrere Nutzersysteme 10, 10', die vorzugsweise über eine Internetverbindung mit dem Applikationsserver 20 verbindbar sind. Die Nutzer der Nutzersysteme erstellen jeweils für sich oder vorzugsweise gemeinsam ein Druck-Erzeugnis 60, das wenigstens ein oder mehrere Texte umfasst, wie es auch beispielhaft in Fig. 3 dargestellt ist. Das Druck-Erzeugnis 60 kann neben mehreren Texten auch Bildmotive 80 enthalten, die in die jeweiligen Seiten des Druck-Erzeugnisses eingebettet werden. Sowohl die Texte als auch die Bildmotive können auf einer Druckseite von den Nutzern beliebig angeordnet und beliebig gestaltet werden. Werden für die Erstellung des Druck-Erzeugnisses hingegen Template-Vorlagen verwendet, kann dadurch beispielsweise wenigstens die Position und Größe von Text- und Bildinhalten festgelegt werden.

Für eine Bildbearbeitung steht den Nutzern vorzugsweise eine Bildbearbeitungseinheit des Applikationsservers 20 zur Verfügung, während die Textbearbeitung durch einen entsprechenden Texteditor23 erfolgt. Die Applikation 21 verarbeitet die Bearbeitungsbefehle beider Anwendungen und kombiniert sie in einer Druckdatei 40 zu der endgültigen Ansicht einer oder mehrerer Druckseiten.

Möchte ein erster Nutzer einen Text erstellen, gibt er diesen über seinen Web Browser 11 in das aufgerufene Texteditorfeld ein, das ihm über den Texteditor 23 der Applikation 21 auf der Anzeige seines Computersystems 10 angeboten wird. In dem in Fig. 2 dargestellten Schritt A erhält der Texteditor 23 der Applikation 21 somit von der Eingabeeinrichtung 12 des Nutzers einen Textbefehl, den der Texteditor 23 ausführt und dem Nutzer im Schritt B den entsprechenden Text auf seiner Anzeige 13 anzeigt. Für die Formatierung des Textes kann der Nutzer beispielsweise wenigstens die Schriftgröße und die Schriftart wählen.

Es kann zweckmäßig sein, dass das Druckerzeugnis 60 über ein gewähltes Mastertemplate erstellt wird, das Vorgaben definiert, die global für alle Seiten des Druck-Erzeugnisses gültig sind. Bei diesen Vorgaben kann es sich beispielsweise um globale Hintergrundfarben, definierte Schriftarten und eine Anzahl von Subtemplates handeln, welche das Layout des Druck-Erzeugnisses je Seite bestimmen. Ein Subtemplate definiert die seitenspezifischen Platzhalter, in welche Inhalte wie Bilder und Text von den verschiedenen Nutzern eingefügt werden können. Das Subtemplate legt somit fest, welcher Inhaltstyp an welcher Stelle der Seite positioniert werden kann. Die eigentliche Generierung der Inhalte findet über die Aktivierung der im Subtemplate hinterlegten Platzhalter (Bild oder Text) statt. Hierbei findet die Editierung der Inhalte vorzugsweise in einem WYSIWYG-Modus statt (What-you-see-is-what-you-get-Modus) direkt in einem von einem Nutzer aktivierten Platzhalter (Inline-Erstellung). Es können jedoch auch Templates gewählt werden, die eine weitestgehend freie Gestaltung des Druck-Erzeugnisses durch die Nutzer ermöglichen. In jedem Fall werden den erstellten Textinhalten jedoch wenigstens die Schriftgröße und die Schriftart als Metadaten hinzugefügt. Die Textinformationen werden zusammen mit den zugehörigen Metadaten an den Speicher 22 des Applikationsservers 20 übergeben und dort hinterlegt.

Bei Metadaten handelt es sich im Sinne dieser Erfindung um jegliche Daten, die Informationen über Textinformationen enthalten, die von einem oder mehreren Personen erstellt wurden. Insbesondere handelt es sich um Daten, welche das optische Erscheinungsbild von Textinhalten in einem Texteditorfeld und auf einer späteren Druckseite eines Druck-Erzeugnisses betreffen.

Vorzugsweise können mehrere Personen gleichzeitig online einen Text bearbeiten. In Fig. 2 sind daher beispielhaft für einen weiteren Nutzer n in Schritt C ein weiterer Textbefehl und in Schritt D die Anzeige des Ergebnisses des Textbefehls auf der Anzeige des Computersystems 10' des zweiten Nutzers dargestellt. Die gemeinsame Bearbeitung eines Textes durch mehrere Nutzer erfolgt dabei vorzugsweise in Echtzeit, wobei ein Text für einen weiteren Nutzer gesperrt ist, so lange sich der Cursor eines anderen Nutzers innerhalb des betreffenden Texteditorfeldes befindet.

Der zweite Nutzer kann die vom ersten Nutzer vorgenommenen Änderungen jedoch vorzugsweise online in Echtzeit verfolgen.

Erfindungsgemäß werden den üblichen Metadaten zu Textinformationen wie Schriftart und Schrittgröße durch den Texteditor 23 weitere Informationen über das Erscheinungsbild der Textinformationen hinzugefügt, um diese anschließend bei einer Konvertierung der Textinformationen in ein pdf-Dokument verwenden zu können. Diese zusätzlichen Metadaten werden anhand der schematischen Darstellung eines Texteditorfeldes 50 und einer Druckfläche 70 eines zu erstellenden pdf-Dokuments in Fig. 3 erläutert, Im Texteditorfeld 50 wurden von den Nutzern mehrere Textzeilen 51 erstellt und gegebenenfalls durch Bildmotive 80 ergänzt. Die Länge der einzelnen Textzeilen kann dabei stark variieren, und bei der Texterstellung können sich beispielsweise Zeilenumbrüche ergeben, bei denen einzelne Wörter durch einen Bindestrich getrennt werden. Insbesondere die Zeilenumbrüche sollen in dem zu erstellenden Druck-Erzeugnis originalgetreu wiedergegeben werden. Erfindungsgemäß wird hierzu um jede Textzeile 51 ein fiktive rechteckiger Umriss 52 erstellt, der zwei diagonal gegenüber liegende Eckpunkte U1 und U2 aufweist. In Fig. 3 befindet sich der erste Eckpunkt U1 beispielsweise an der oberen linken Ecke des Umrisses 52, während sich der zweite Eckpunkt U2 an der unteren rechten Ecke befindet. Ferner wird im Texteditorfeld 50 ein Bezugspunkt T definiert, der in dem dargestellten Ausführungsbeispiel in der oberen linken Ecke des Texteditorfeldes 50 angeordnet ist. Der Bezugspunkt T kann jedoch beliebig gewählt werden.

Der Umriss 52 wird vorzugsweise so um die betreffende Textzeile 51 gelegt, dass er die Textinformationen der Textzeile 51 an allen vier Seiten berührt. Der rechteckige Umriss 52 wird somit gerade so klein gewählt, dass die gesamten Textinformationen einer Textzeile 51 innerhalb des Umrisses 52 liegen. Alternativ kann ein Abstand der Seiten des fiktiven rechteckigen Umrisses 52 zu den Textinformationen gewählt werden, so dass die Seiten des Umrisses 52 die Textinformationen nicht berühren. Der Umriss 52 kann ferner einige Seiten der Textinformationen berühren, während er zu anderen Seiten beabstandet ist. In jedem Fall muss die gewählte Vorgehensweise analog auf einen Umriss 52' übertragen werden, der dann in einer Druckfläche 70 zu erstellen ist.

Anhand des fiktiven Rechteckes 52 kann die Größe und Lage der betreffenden Textzeile 51 innerhalb des Texteditorfeldes 50 bestimmt werden. Hierzu wird der Abstand zwischen dem ersten Eckpunkt U1 und dem Bezugspunkt T und dem zweiten Eckpunkt U2 und dem Bezugspunkt T ermittelt. Diese Abstände werden vorzugsweise in der Einheit Millimeter bestimmt, indem die Abmessungen des Texteditorfeldes mit den Abmessungen einer späteren Druckseite gleichgesetzt werden. Da die Abmessungen einer zu erstellenden Druckseite bekannt sind und das Texteditorfeld das gleiche Format wie diese Druckseite aufweist (z.B. DIN A5), können die Abmessungen einer Druckseite entsprechend auf die Abmessungen des Texteditorfeldes 50 übertragen werden. Diese Übertragung ist unabhängig von der realen Größe des Texteditorfeldes 50 auf der Anzeige 13 eines Nutzers.

Dabei ist unter einem fiktiven rechteckigen Umriss ein Rechteck zu verstehen, das im Texteditorfeld 50 für den Nutzer nicht sichtbar wird. Das Rechteck wird lediglich im Hintergrund zu jeder Textzeile 51 erzeugt und für eine Berechnung der Lage und Größe einer Textzeile verwendet.

Die beiden ermittelten Abstände der Eckpunkte des Umrisses 52 zum Bezugspunkt T des Texteditorfeldes 50 werden zusammen mit wenigstens der Schriftart und der Schriftgröße der Textinformationen der Textzeile 51 als Metadaten im Speicher 22 der Applikation 21 hinterlegt. Dies erfolgt vorzugsweise für jede Textzeile im Texteditorfeld. Dabei kann es vorgesehen sein, dass veränderte Metadaten immer dann neu im Speicher 22 hinterlegt werden, wenn ein Nutzer eine Bearbeitung einer Textzeile 51 vorgenommen hat und sich die Abstände der Eckpunkte U1 und U2 zum Bezugspunkt T dadurch geändert haben. Alternativ kann vorgesehen sein, dass die Metadaten bezüglich der Lage und Größe einer Textzeile 51 erst dann einmalig erzeugt und im Speicher 22 hinterlegt werden, wenn die Bearbeitung eines Textfeldes abgeschlossen ist und als "fertig bearbeitet" gekennzeichnet wurde.

Die von den mehreren Nutzern vorgenommene Texterstellung und Textbearbeitung wird auf dem Applikationsserver 20 protokolliert. Dies erfolgt vorzugsweise Objekt-bezogen, indem eine Druckseite serverseitig in einzelne Textobjekte und Bildobjekte untergliedert wird. Die Bearbeitung der jeweiligen Objekte wird somit ebenfalls Objekt-bezogen protokolliert. Dies hat den Vorteil, dass Änderungen an Objekten in Echtzeit an alle Web Browser von aktuellen Nutzern der Applikation 21 übermittelt werden können, da stets nur Daten zu dem betreffenden geänderten Objekt übertragen werden müssen, während Daten zu unveränderten Objekten in den Web Browsern der Nutzer nicht aktualisiert werden.

Nach Fertigstellung des Layouts des Druck-Erzeugnisses muss aus den protokollierten Bearbeitungsinformationen im Speicher 22 der Applikation 21 eine Druckdatei 40 erzeugt werden, die in möglichst hoher Qualität vom Drucksystem 30 ausgedruckt werden kann. Bei dieser Druckdatei 40 handelt es sich um eine Datei im pdf-Format. Die Erstellung eines pdf-Dokuments, bestehend aus einer oder mehreren Druckseiten, wird durch ein Konvertierungsmodul 24 durchgeführt. Das Konvertierungsmodul 24 kann sich auf dem Applikationsserver 20 befinden oder getrennt von diesem ausgeführt sein. Bei einer getrennten Ausführung übermittelt der Applikationsserver 20 das Konvertierungsmodul 24 die erforderlichen Daten aus dem Speicher 22 und das Konvertierungsmodul 24 liefert der Applikation 21 ein pdf-Dokument zurück. Zur Konvertierung der Editordaten ist vorzugsweise ein Konverter programmiert, welcher die eingegebenen Textdaten und auch Bilddaten in ein druckbares pdf-Dokument wandelt. Der Konverter kann beispielsweise in PHP5 realisiert werden. Zur Erstellung der pdf-Datei kann das PHP-Modul PDFLib verwendet werden.

Bei der Konvertierung der Textinformationen greift der Konverter auf die Metadaten der jeweiligen Textzeilen zurück. Aus den Abständen der Eckpunkte der jeweiligen rechteckigen Umrisse jeder Textzeile kann der Konverter die Lage und Größe des jeweiligen Umrisses im Texteditorfeld bestimmen. Diese Informationen überträgt er auf eine Druckfläche 70 der zu erzeugenden Druckdatei 40, indem in der Druckfläche 70 ein Umriss 52' in der gleichen Position und mit der gleichen Größe erzeugt wird. Dieser Umriss weist die diagonal gegenüber liegenden Eckpunkte U1' und U2' auf. Hierzu ist es erforderlich, dass ein Bezugspunkt D der Druckfläche 70 definiert wird, dessen Position der Position des Bezugspunktes T im Texteditorfeld 50 entspricht. Dies ist in Fig. 3 dargestellt.

Bei der Konvertierung werden in der Druckfläche 70 des zu erstellenden pdf-Dokuments 40 in den so erstellen Umriss 52' die zugehörigen Textinformationen in der gewählten Schriftgröße und Schriftart eingefügt. Dies erfolgt bis zu einem bestimmten Grad unabhängig von Zeichenabständen und Wortlängen, die sich sonst durch die gewählte Schriftart und Schriftgröße ergeben würden. Vielmehr wird der Umriss 52' vertikal und horizontal vollständig so mit dem Text gefüllt, dass der Umriss 52' die entstehende Textzeile 51' an allen Seiten berührt. Dies entspricht dem Erscheinungsbild der Textzeile 51 im Texteditorfeld 50 der Nutzer, das so genau auf das Erscheinungsbild der Druckfläche 70 übertragen wird. Dieser Vorgang wird für alle Textzeilen durchgeführt und gegebenenfalls werden auch Bildmotive 80 auf der Druckfläche platziert, so dass die gesamte Druckfläche 70 eine weitestgehend genaue Wiedergabe der entsprechenden Vorschauseite in den Web Browsern der Nutzer darstellt. Falls das Druck-Erzeugnis 60 über mehrere Druckseiten verfügt, wird der Vorgang für die Textinformationen mehrerer Druckflächen des pdf-Dokuments durchgeführt und so eine Druckdatei 40 mit mehreren Druckseiten erzeugt.

In einem Ausführungsbeispiel der Erfindung werden Daten mit 300dpi-Auflösung in die pdf-Datei eingebettet. Die Druckdatei 40 wird in Fig. 2 in Schritt E an das Drucksystem 30 übermittelt oder dem Drucksystem auf dem Applikationsserver 20 zum Download bereitgestellt. Ein Drucker des Drucksystems 30 druckt das Druck-Erzeugnis 60 im Schritt F aus, wobei zuvor beispielsweise anhand einer Liste eine Sichtprüfung nach unzulässigen Inhalten durchgeführt werden kann.

Ergänzend kann von der Applikation 21 ein pdf-Dokument in geringerer Auflösung von etwa 72dpi erstellt und einem oder mehreren Nutzern der Online-Applikation 21 bereitgestellt werden. Der Nutzer kann diese Datei über seinem Web Browser 11 auf seinem lokalen Drucker 15 ausdrucken oder von dem Applikationsserver 20 auf sein lokales Computersystem 10 herunterladen. Ferner kann auch die Sichtprüfung im Drucksystem 30 anhand des pdf-Dokuments mit einer Auflösung von etwa 72dpi durchgeführt werden.

Die Druckleistung des Drucksystems 30 und/oder die Bereitstellung der Applikation 21 mit ihren Funktionen kann einem oder mehreren Nutzern in Rechnung gestellt werden, was über übliche Verfahren erfolgen kann.

### Bezugszeichenliste:

- 10,10': Erstes Computersystem, Nutzersystem
- 11,11': Web Browser
- 12: Eingabeeinrichtung, Tastatur, EDV-Maus
- 13: Anzeige, Monitor, Display
- 14: Speicher Nutzersystem
- 15: Drucker Nutzersystem
- 16: Internetverbindung
- 20: Zweites Computersystem, Applikationsserver
- 21: Applikation
- 22: Speicher Applikationsserver
- 23: Texteditorkomponente, web-basierter Texteditor
- 24: Konvertierungsmodul
- 30: Drucksystem
- 31: Drucker Drucksystem
- 32: Druckapplikation
- 40: Druckdatei
- 50: Texteditorfeld
- 51,51': Textzeile
- 52,52': Umriss, fiktiv
- 60: Druck-Erzeugnis
- 70: Druckfläche pdf-Dokument
- 80: Bildmotiv

- T: Bezugspunkt Texteditorfeld
- U1, U2: Eckpunkt Umriss Texteditorfeld
- D: Bezugspunkt Druckfläche pdf-Dokument
- U1', U2': Eckpunkt Umriss Druckfläche pdf-Dokument

## Patentansprüche

1. Verfahren zur Konvertierung von Textinformationen innerhalb eines Texteditorfeldes (50) mit einem definierten Bezugspunkt T, die in wenigstens einer Textzeile (51) in dem Texteditorfeld (50) erfasst werden, in ein Dokument (40) im pdf-Format durch ein Konvertierungsmodul (24), wobei das Dokument (40) im pdf-Format wenigstens eine Druckfläche (70) beinhaltet, die dem Texteditorfeld (50) entspricht, und dass bei der Konvertierung der Textinformationen durch das Konvertierungsmodul (24) wenigstens die Schriftgröße und die Schriftart der Textzeile (51) als Metadaten verwendet werden,
**gekennzeichnet durch** folgende Verfahrensschritte:
a) Erstellen eines fiktiven rechteckigen Umrisses (52) um die Textzeile (51) im Texteditorfeld (50), wobei dieser rechteckige Umriss (52) zwei diagonal gegenüber liegende Eckpunkte U1 und U2 aufweist;
b) Ermitteln des Abstands zwischen dem Bezugspunkt T des Texteditorfeldes (50) und dem Eckpunkt U1 des Umrisses (52); und Ermitteln des Abstands zwischen dem Bezugspunkt T des Texteditorfeldes (50) und dem Eckpunkt U2 des Umrisses (52);
c) Verknüpfung der beiden ermittelten Abstände wenigstens mit der Schriftgröße und der Schriftart der Textinformationen der Textzeile (51) zu Metadaten und Speichern der Textinformationen und der zugehörigen Metadaten in einem Speicher (22);
d) Konvertieren der Textinformationen der Textzeile (51) in ein Dokument (40) im pdf-Format, wobei die zugehörigen Metadaten aus dem Speicher (22) verwendet werden, indem
e) das Konvertierungsmodul (24) die Abmessungen der Druckfläche (70) des zu erstellenden Dokuments (40) im pdf-Format mit den Abmessungen des Texteditorfeldes (50) gleichsetzt und in der Druckfläche (70) des Dokuments (40) einen Bezugspunkt D definiert, dessen Position dem Bezugspunkt T im Texteditorfeld (50) entspricht; und
f) das Konvertierungsmodul (24) in der Druckfläche (70) einen fiktiven rechteckigen Umriss (52') mit diagonal gegenüberliegenden Eckpunkten U1' und U2' erstelit, deren Position der Position der Eckpunkte U1 und U2 des Umrisses (52) im Texteditorfeld (50) entspricht, wobei der jeweilige Abstand zwischen den Eckpunkten U1' und U2' und dem definierten Bezugspunkt D der Druckfläche (70) dem jeweiligen Abstand zwischen den Eckpunkten U1 und U2 und dem definierten Bezugspunkt T des Texteditorfeldes (50) entspricht; und
g) das Konvertierungsmodul (24) die Textinformationen der Textzeile (51) in der vorgegebenen Schriftart und Schriftgröße in den fiktiven Umriss (52') in der Druckfläche (70) einfügt und in der Druckfläche (70) eine Textzeile (51') erzeugt; und
h) das Konvertierungsmodul (24) wenigstens die Druckfläche (70) in ein Dokument im pdf-Format konvertiert.

2. Verfahren nach Anspruch 1,
**dadurch gekennzeichnet,**
**dass** der fiktive rechteckige Umriss (52) im Texteditorfeld (50) die Textinformationen der Textzeile (51) an allen vier Seiten berührt, während der fiktive rechteckige Umriss (52') in der Druckfläche (70) die eingefügten Textinformationen der Textzeile (51') an allen vier Seiten berührt.

3. Verfahren nach Anspruch 1,
**dadurch gekennzeichnet,**
**dass** im Texteditorfeld (50) mehrere Textzeilen mit Textinformationen erfasst werden und für die Konvertierung mehrerer Textzeilen die Verfahrensschritte a) bis g) gemäß Anspruch 1 in der Druckfläche (70) des zu erstellenden Dokuments (40) im pdf-Format für jede der Textzeilen durchgeführt werden, wobei für jede Textzeile jeweils ein fiktiver rechteckiger Umriss im Texteditorfeld (50) und in der Druckfläche (70) erzeugt wird.

4. Verfahren nach Anspruch 3,
**dadurch gekennzeichnet,**
**dass** neben mehreren Textzeilen wenigstens ein Bildmotiv (80) in das Dokument (40) im pdf-Format aufgenommen wird.

5. Verfahren nach einem der Ansprüche 1 bis 4,
**dadurch gekennzeichnet,**
**dass** das Texteditorfeld (50) in einem Web Browser (11;11') über einen Texteditor (23) erzeugt wird, der von einer web-basierten Anwendung auf einem Applikationsserver (20) bereitgestellt wird, und dass die Textinformationen wenigstens einer Textzeile (51) zusammen mit den dazu erstellten Metadaten in einem Speicher (22) des Applikationsservers (20) hinterlegt werden, bevor sie an das Konvertierungsmodul (24) übermittelt werden, das in Verbindung mit dem Applikationsserver (20) steht.

6. Verfahren nach einem der Ansprüche 1 bis 5,
**dadurch gekennzeichnet,**
**dass** die Metadaten zu Textinformationen einer Textzeile (51) im Speicher (22) fortlaufend verändert werden, sobald Änderungen der betreffenden Textzeile (51) im Texteditorfeld (50) vorgenommen wurden, oder dass Metadaten zu Textinformationen einer Textzeile (51) erstellt und im Speicher (22) hinterlegt werden, wenn ein Speichersignal in einem Texteditor (23) aktiviert wurde.
